# EUROPÄISCHE PATENTSCHRIFT

(11) **EP 0 634 720 B1**
(45) Veröffentlichungstag und Bekanntmachung des Hinweises auf die Patenterteilung: **23.09.1998**
(21) Anmeldenummer: 93111137.1
(22) Anmeldetag: 12.07.1993
(51) Int. Cl.: G06F 12/02, G06F 9/315

(54) **Verfahren und Schaltungsanordnung zur Beschleunigung der Ausführung von feldverarbeitenden Befehlen in Datenverarbeitungsanlagen**
Method and circuit for accelerating execution of array processing instructions in data processing system
Procédé et circuit pour accélérer l'exécution des instructions de traitement de champs dans un système de traitement de données

(43) Veröffentlichungstag der Anmeldung: 18.01.1995
(73) Patentinhaber: Siemens Nixdorf Informationssysteme Aktiengesellschaft, 33102 Paderborn (DE)
(72) Erfinder: Salzmann, Horst, Dipl.-Phys., D-81825 München (DE)
(74) Vertreter: Epping, Wilhelm, Dr.-Ing.

(56) Entgegenhaltungen:
- DE-A- 3 141 451
- DE-C- 3 215 062
- GB-A- 2 117 145
- IBM TECHNICAL DISCLOSURE BULLETIN Bd. 30, Nr. 1 , Juni 1987 , NEW YORK US Seiten 204 - 205 'Address translation register buffering for processor'

## Beschreibung

Die Erfindung betrifft ein Verfahren und Schaltungsanordnung zur Beschleunigung der Ausführung von feldverarbeitenden Befehlen in Datenverarbeitungsanlagen gemäß dem Oberbegriff von Patentanspruch 1 bzw. Patentanspruch 10.

Das Speichersystem einer Datenverarbeitungsanlage wird in der Regel in gleich große Seiten unterteilt, wobei eine Seite zwei bzw. vier KByte groß ist und entsprechend einem Doppelwortraster strukturiert ist. Bei feldverarbeitenden Befehlen, wie z.B. Speicher-Speicher-Befehlen, können Anfang und Ende der Operanden in verschiedenen Seiten liegen. Vor einer Befehlsausführung muß daher geprüft werden, ob
- alle benötigten Seiten im Arbeitsspeicher vorhanden sind und
- der gewünschte Zugriff erlaubt ist.

Bei nach dem Fließbandprinzip arbeitenden Datenverarbeitungsanlagen mit Verteilung der Verarbeitungsaufgaben auf einen Befehlsaufbereitungs- und einen Befehlsausführungsprozessor ist es entsprechend der Patentschrift DE-32 15 062-C2 bereits bekannt, daß der Befehlsaufbereitungsprozessor vor Weiterleitung des aufbereiteten Befehles an den Befehlsausführungsprozessor anhand der Längenangabe im Befehl bereits überprüft, ob das Ende der benötigten Operanden innerhalb derselben Seite liegt oder eine Seitenüberschreitung erforderlich wird. Das Ergebnis wird dann im Rahmen der Befehlsparameter an den Befehlsausführungsprozessor übergeben, der daraufhin entsprechend reagiert, indem z.B. vor der eigentlichen Befehlsausführung geprüft wird, ob bei einer Seitenüberschreitung die benötigte Seite vorhanden ist oder erst nachgeladen werden muß.

Außerdem muß, bedingt durch das aus Leistungsgründen notwendige Vorauslesen von Teiloperanden bei längeren Operanden, abhängig davon, ob eine Seitenüberschreitung vom Befehlsaufbereitungsprozessor angezeigt ist oder nicht, unterschiedlich reagiert werden, da zum Zeitpunkt des Vorauslesens noch nicht entschieden werden kann, ob ein weiterer Teiloperand noch benötigt wird. Es muß daher bei jedem Vorauslesen von Teiloperanden geprüft werden, ob dabei die Seitengrenze überschritten wird und ob dieses erlaubt ist. Ist eine Seitengrenzüberschreitung erlaubt, kann das Vorauslesen der Teiloperanden ohne Unterbrechung fortgesetzt werden. Im anderen Falle muß das Vorauslesen unterdrückt werden, damit nicht auf eine gegebenenfalls nicht vorhandene Seite zugegriffen und dadurch ein Abbruch der Befehlsausführung herbeigeführt wird.

Zur Verringerung der damit verbundenen Schwierigkeiten erfolgen Lese- und Schreibzugriffe zum Speichersystem in der Regel an der Doppelwortgrenze ausgerichtet in Doppelwortbreite unabhängig vom Beginn der Operanden innerhalb eines Doppelwortes. Bei einer gleichgroßen Verarbeitungsbreite endet ein vorauszulesender Teiloperand daher immer an einer Doppelwortgrenze und das letzte Doppelwort einer Seite immer an der Seitengrenze, so daß die Doppelwortgrenze überschreitende Teiloperanden von Doppelwortbreite vermieden werden.

Die Erfindung bezweckt nun eine Beschleunigung der Ausführung von feldverarbeitenden Befehlen und damit eine Steigerung der Verarbeitungsleistung.

Dies wird einerseits durch die sich aus den kennzeichnenden Merkmalen des Patentanspruchs 1 ergebende Arbeitweise erreicht. Danach wird von der bisher üblichen Adreßübersetzung vor jedem Speicherzugriff abgewichen, indem im Rahmen einer Befehlsausführung jede benötigte Seitenadresse nur einmal übersetzt und dann abgespeichert wird. Analoges gilt für eventuell benötigte Folgeseiten bei einer vom Befehlsaufbereitungsprozessor angezeigten Seitenüberschreitung.

Vor der Aufnahme der eigentlichen Befehlsausführung stehen daher alle benötigten absoluten Seitenadressen zur Verfügung. Diese brauchen für den jeweiligen Speicherzugriff lediglich durch die Byteadresse der entsprechend dem Fortgang der Befehlsverarbeitung fortgeschriebenen virtuellen Speicheradresse ergänzt zu werden. Ob ein beabsichtigter Speicherzugriff zulässig ist, wird dabei in einfacher Weise von der Gültigkeit der jeweiligen absoluten Seitenadresse abhängig gemacht. Ist sie ungültig, unterbleibt der Speicherzugriff. Damit können alle bisher im Rahmen der Adreßrechnung vor jedem Speicherzugriff vorgenommenen Tests auf Seitenüberschreitung entfallen. Auch braucht im Falle einer Seitenüberschreitung von der Steuerung nicht gesondert reagiert zu werden, um ein Vorauslesen zu verhindern, da gemäß der Erfindung das Vorauslesen eines neuen Teiloperanden automatisch unterdrückt wird, wenn die absolute Seitenadresse nicht für gültig erklärt ist.

Damit vereinfacht sich der Steuerungsablauf für die Befehlsverarbeitung ganz erheblich. Insbesondere kann entsprechend der Weiterbildung von Patentanspruch 5 in eine lediglich zwei Maschinenzyklen umfassende Schleifensteuerung für die Verarbeitung aufeinanderfolgender Teiloperanden übergeleitet werden.

Andere Weiterbildungen des Verfahrens ergeben sich aus den Patentansprüchen 2 bis 4 und 6 bis 9.

Der Aufwand für die Durchfürung des neuen Verfahrens ist verhältnismäßig gering. Die dazu benötigte Schaltungsanordnung ergibt sich aus den kennzeichnenden Merkmalen des Patentanspruches 10. Sie erfordert im wesentlichen mit der Adreßübersetzungseinheit gekoppelte zusätzliche Register für die Zwischenspeicherung der bereits vor der eigentlichen Befehlsausführung übersetzten absoluten Seitenadressen für alle zur Befehlsausführung benötigten Seiten und einige Auswahlschalter zur Ansteuerung der Register und zur Weiterleitung der jeweils benötigten absoluten Seitenadresse aus dem jeweiligen Register an den Adreßbus des Speichersystems in Verbindung mit einer entsprechend abgepaßten Ablaufsteuerung. Weiterbildungen hierzu ergeben sich aus den Ansprüchen 11 bis 13.

Einzelheiten der Erfindung seien nachfolgend anhand eines in der Zeichnung dargestellten Ausführungsbeispieles näher erläutert. Im einzelnen zeigen
Figur 1 ein Übersichtsschaltbild eines Rechners,
Figur 2 ein Blockschaltbild des gemäß der Erfindung gestalteten Befehlsausführungsprozessors von Figur 1,
Figur 3 eine Darstellung zur Erläuterung der Operandenbereitstellung und
Figur 4, Figur 5A und Figur 5B Ablaufdiagramme für die Steuerung der Befehlsausführung durch den Befehlsausführungsprozessor von Figur 2.

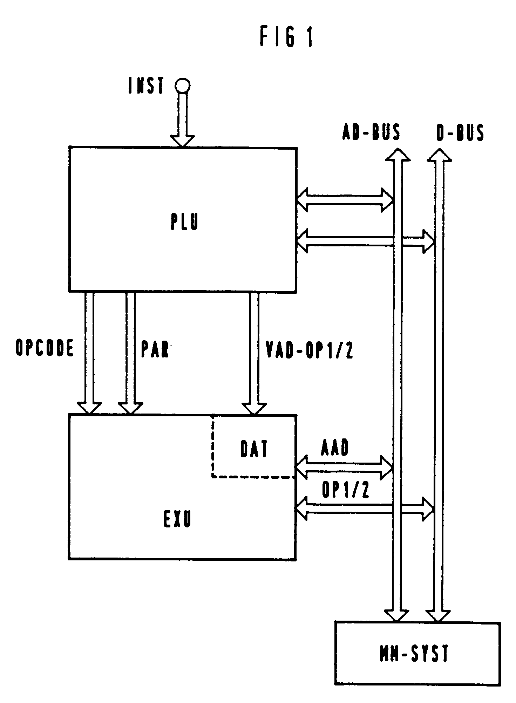

Figur 1 zeigt das Übersichtsschaltbild eines aus einem Befehlsaufbereitungsprozessor PLU und einem Befehlsausführungsprozessor EXU bestehenden Rechners einer Datenverarbeitungsanlage, die beide über einen Adreßbus AD-BUS und einen Datenbus D-BUS mit dem Speichersystem MM-SYST verbunden sind. Die Darstellung ist rein schematisch. So können z.B. Teile des Speichersystems als Cachespeicher in die beiden Prozessoren PLU und EXU verlagert sein.

Dem Befehlsaufbereitungsprozessor PLU zugeführte Programmbefehle INST werden von diesem aufbereitet. Anschließend wird der zugehörige Befehlscode OPCODE mit den entsprechenden Befehlsparametern PAR sowie den berechneten virtuellen Operandenadressen VAD-OP1/2 für die benötigten Operanden OP... an den Befehlsausführungsprozessor EXU zur Befehlsausführung weitergeleitet, der u.a. die Adreßübersetzung durch die Adreßübersetzungseinheit DAT steuert.

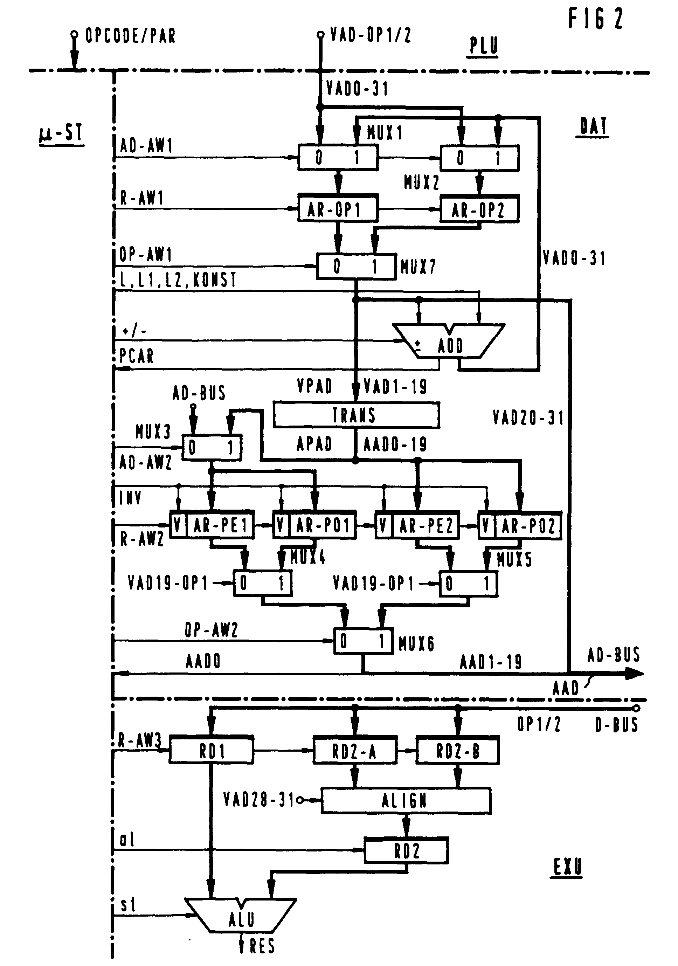

Figur 2 zeigt in Form eines Blockschaltbildes den im Rahmen der Erfindung interessierenden Teil des Befehlsausführungsprozessors EXU. Der Operationscode OPCODE und die zugehörigen Befehlsparameter PAR des jeweils auszuführenden Befehles werden in bekannter Weise der Mikroprogrammsteuerung µ-ST zugeführt, während die virtuellen Adressen VAD-OP1/2 der jeweiligen Operanden OP1 oder OP2 über Auswahlschalter MUX1 bzw. MUX2 dem Adressenregister AR-OP1 für den ersten Operanden bzw. dem Register AR-OP2 für den zweiten Operanden zugeleitet werden. Die Einstellung der Auswahlschalter MUX1 und MUX2 erfolgt durch die Steuersignale AD-AW1 der Mikroprogrammsteuerung µ-ST, während weitere Steuersignale R-AW1 die Registerauswahl treffen.

Ein den beiden Adressenregistern AR-OP... nachgeschalteter Auswahlschalter MUX7 leitet abhängig von den Steuersignalen OP-AW1 den jeweils benötigten Operanden an den eigentlichen Adreßübersetzungsteil TRANS weiter.

Mit dem Ausgang des Auswahlschalters MUX7 ist desweiteren ein Addier-Subtrahierwerk ADD mit seinem einen Operandeneingang angeschaltet, dessen zweiter Operandeneingang jeweils von der Mikroprogrammsteuerung µ-ST mit dem Wert für die jeweilige Operandenlänge L bzw. L1 oder L2 bzw. einer Konstanten KONST beaufschlagbar ist, so daß je nach Bedarf das Ende der Operanden berechnet oder bei der Verarbeitung längerer Operanden die Adresse in den Adreßregistern AR-OP... entsprechend der Länge der Teiloperanden im Rahmen der Befehlsausführung fortgeschrieben werden kann. Die jeweils berechnete virtuelle Adresse VAD mit den Adressenbits 0 bis 31 wird daher über den zweiten Eingang der Auswahlschalter MUX1 bzw. MUX2 vom jeweils zuständigen Adreßregister AR-OP... übernommen.

In Auswirkung der Erfindung sind an den Ausgang des Adreßübersetzungsteiles TRANS für jeden der beiden Operanden wenigstens zwei Register AR-PE1 und AR-P01 bzw. AR-PE2 und AR-P02 zur Zwischenspeicherung der vom Adreßübersetzungsteil TRANS zu der jeweils zugeführten virtuellen Seitenadresse VPAD mit den Adressenbits 1 bis 19 bei Seiten mit 4KByte Speicherkapazität gelieferten absoluten Seitenadressen APAD angeschlossen. Auf diese Weise ist die Vorausetzung geschaffen, daß jeweils alle für die vollständige Bereitstellung der Operanden benötigten absoluten Seitenaddressen APAD vor Beginn der eigentlichen Befehlsausführung ermitttelt und zwischengespeichert werden können, so daß sie im Rahmen der weiteren Befehlsausführung bei Bedarf unmittelbar ohne vorherige Adreßübersetzung abrufbar sind.

Im vorliegenden Fall sind jeweils nur zwei Register AR-Pxy je Operand vorgesehen, da die Operandenlänge in der Regel 4 KByte nicht überschreitet und maximal daher nur zwei Seiten für die Bereitstellung erforderlich sind. Würden mehr als zwei Seiten benötigt, wäre die Anzahl der Register AR-Pxy je Operanden entsprechend zu vergrößern.

Da von den Adressenbits der virtuellen Adresse VAD lediglich die Adressenbits 1 bis 31 von Bedeutung sind und das höchstwertige Adressenbit VADO in der Regel auf logisch "0" gesetzt ist, wird dieses Adressenbit bei der Zwischenspeicherung der absoluten Seitenadressen APAD in den Registern AR-Pxy als Gültigkeitsbit V verwendet, und zwar in der Weise, daß jeweils vor dem Start des Befehlsausführungsprozessors EXU für die Ausführung eines vom Befehlsaufbereitungsprozessors PLU aufbereiteten Befehles alle Gültigkeitsbits V auf logisch "1" gesetzt werden. Wird dann nachfolgend eine gültige absolute Seitenadresse APAD in eines der Register AR-Pxy geladen, dann wird das jeweils zugehörige Adressenbit wieder zurückgesetzt, weil bei einen nicht-gültigen absoluten Seitenadresse das Gültigkeitsbit V mit V logisch "I" bei der Weiterleitung im Rahmen eines Speicherzugriffes dazu verwendet wird, den jeweiligen Speicherbefehl in einen NOOP-Befehl abzuwandeln.

Die Weiterleitung der jeweils benötigten absoluten Seitenadresse APAD erfolgt über nachgeschaltete Auswahlschalter MUX4 bzw. MUX5 sowie MUX6, so daß die Seitenadreßbits 1 bis 19 mit den Byteadressenbits 20 bis 31 der virtuellen Adresse VAD die Adressenbits 1 bis 31 der absoluten Adresse AAD zur Ansteuerung des Speichersystems MM-SYST über den Adreßbus AD-BUS bilden.

Die Auswahl der Register AR-Px1 bzw. AR-Px2 für die Übernahme der absoluten Seitenadressen APAD erfolgt operandenabhängig und abhängig vom jeweiligen Adressenbit 19 der virtuellen Adresse VAD durch die Signale R-AW2. Handelt es sich um eine ungerade Seite entsprechend VAD19=1 wird das Register AR-PO1 bzw. AR-PO2 zur Übernahme freigegeben, während bei einer geraden Seite entsprechend VAD19=0 eines der Register AR-PE1 bzw. AR-PE2 für die Übernahme ausgewählt wird. Bei mehr als zwei Registern wäre daher die Anzahl der Adressenbits auf die für die Auswahl erforderliche Anzahl zu erhöhen. In analoger Weise dienen die Adressenbits VAD19-OP1 bzw. VAD19-OP2 zur Bildung der Steuersignale AD-AW3 zur Einstellung der Auswahlschalter MUX4 bzw. MUX5, während der Auswahlschalter MUX6 lediglich operandenabhängig durch das Signal OP-AW2 eingestellt wird.

Der untere Teil von Figur 2 zeigt die arithmetische/logische Verknüpfungseinheit ALU des Befehlsausführungsprozessors EXU mit den vorgeschalteten Bereitstellungsregistern RD1 bzw. RD2-A und RD2-B die über den Datenbus D-BUS mit den jeweils aus dem Speichersystem MM-SYST gelesenen Daten für die beiden Operanden geladen werden. Der erste Operand wird dabei jeweils ins einzige Register RD1 geladen, während für die Bereitstellung des zweiten Operandens gegebenenfalls zwei Register RD2-A und RD2-B benötigt werden. Dies ist der Fall, wenn z.B. unabhängig vom Beginn eines Operanden an der Doppelwortgrenze ausgerichtet gearbeitet wird und der auf den ersten Operanden auszurichtende zweite Operand oder dessen Teilioperand jeweils die Doppelwortgrenze überschreitet, so daß Bytes aus zwei aufeinanderfolgenden Doppelwörtern benötigt werden. Diese Auswahl mit gleichzeitiger Ausrichtung erfolgt adressenabhängig durch den nachgeschalteten Ausrichter ALIGN, so daß eine Befehlsausführung jeweils erst erfolgen kann, wenn der ausgerichtete zweite Operand im nachgeschalteten Register RD2 zur Verfügung steht, daß durch das Übernahmesignal al gesteuert wird.

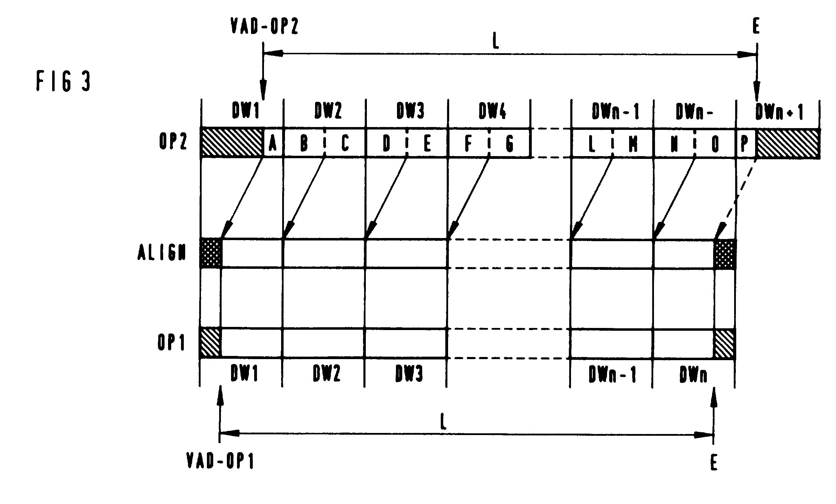

Anhand von Figur 3 sei dieser Zusammenhang näher erläutert:

Die untere Zeile zeigt eine Folge von nacheinander für die Verarbeitung zur Verfügung stehenden Doppelwörtern DW1 bis DWn, die den ersten Operanden OP1 enthalten. Die virtuelle Startadresse VAD-OP1 dieses Operanden weicht dabei von der Dopppelwortgrenze ab, ebenso das durch die Operandenlänge L gekennzeichnete Ende E dieses Operanden. Die oberste Zeile zeigt in analoger Weise die den zweiten Operanden OP2 enthaltende Doppel; wortfolge, wobei der rechts von der Startadresse VAD-OP2 liegende gültige Teil A des ersten Doppelwortes DW1 weniger Bytes umfaßt als das erste Doppelwort DW1 vom ersten Operanden OP1. Damit der den ersten Teiloperanden bildende gültige Teil im ersten Doppelwort DW1 des ersten Operanden OP1 verarbeitet werden kann muß neben dem Teil A des Operanden OP2 auch der nachfolgende Teil B vom Doppelwort DW2 zur Verfügung stehen und gemäß der mittleren Zeile ALIGN auf den ersten Operanden OP1 ausgerichtet bereitgestellt werden.

Daraus folgt, daß bei einer gegenüber dem ersten Operanden OP1 geringeren Anzahl von gültigen Bytes im ersten Doppelwort DW1 des zweiten Operanden OP2 vor der möglichen Ausführung des durch das erste Doppelwort DW1 des ersten Operanden OP1 vorgegebenen ersten Teiloperanden immer erst ein weiteres Doppelwort des zweiten Operanden OP2, nämlich das Doppelwort DW2 aus dem Speichersystem nachgelesen werden muß, das dann vom parallelen Register RD2-B aufgenommen wird. Im weiteren Verlauf der Operandenverarbeitung bei längeren Operanden braucht dann zu jedem weiteren Doppelwort des ersten Operanden OP1 ebenfalls nur ein Doppelwort des zweiten Operanden OP2 gelesen zu werden, wenn die nachfolgend zu lesenden Doppelwörter abwechselnd in das eine oder das andere der beiden Register RD2-A und RD2-B geladen werden, da das jeweils andere Register immer den noch nicht verarbeiteten Teil des zweiten Operanden OP2 enthält.

Die Notwendigkeit zum Nachlesen wird zweckmäßig vom Befehlsaufbereitungsprozessor PLU ermittelt und dem Befehlsausführungsprozessor EXU im Rahmen der Befehlsparameter PAR mitgeteilt. Im Rahmen dieser Prüfungen kann außerdem ohne weiteren Aufwand festgestellt werden, ob die Befehlsausführung allein anhand der in den ersten Doppelwörtern DW1 beider Operanden enthaltenen gültigen Bytes möglich ist und daher kein weiteres Doppelwort mehr benötigt wird, so daß bei entsprechender Signalisierung im Rahmen der übergebenen Befehlsparameter PAR der Befehlsausführungsprozessor EXU entsprechend unterschiedlich reagieren kann.

Beim Ausführungsbeispiel gemaß. Figur 2 ist weiterhin unterstellt, daß das Lesen des ersten Doppelwortes DW1 vom ersten Operanden OP1 bereits vom Befehlsaufbereitungsprozessor PLU veranlaßt wird, so daß schon zu diesem Zeitpunkt eine Übersetzung der zugehörigen virtuellen Adresse VAP-OP1 erforderlich ist. Diese Übersetzung braucht nach der Befehlsübergabe an den Befehlsausführungsprozessor EXU nicht wiederholt zu werden, wenn beispielsweise beim Ansteuern des Speichersystems MM-SYST von der auf dem Adreßbus AD-BUS anliegenden absoluten Adresse AAD die absolute Seitenadresse APAD abgezweigt und dem zuständigen Register AR-PE1 oder AR-PO1 zugeführt wird. Zu diesem Zweck ist den beiden Registern ein Auswahlschalter MUX3 für die Umsteuerung vorgeschaltet, die ebenfalls durch die Mikroprogrammsteuerung µ-ST mit dem Signal AD-AW2 bewirkt wird.

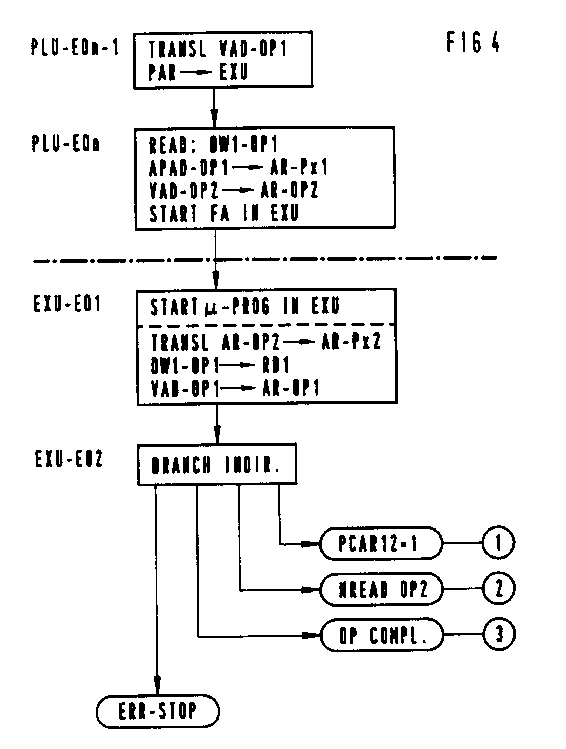

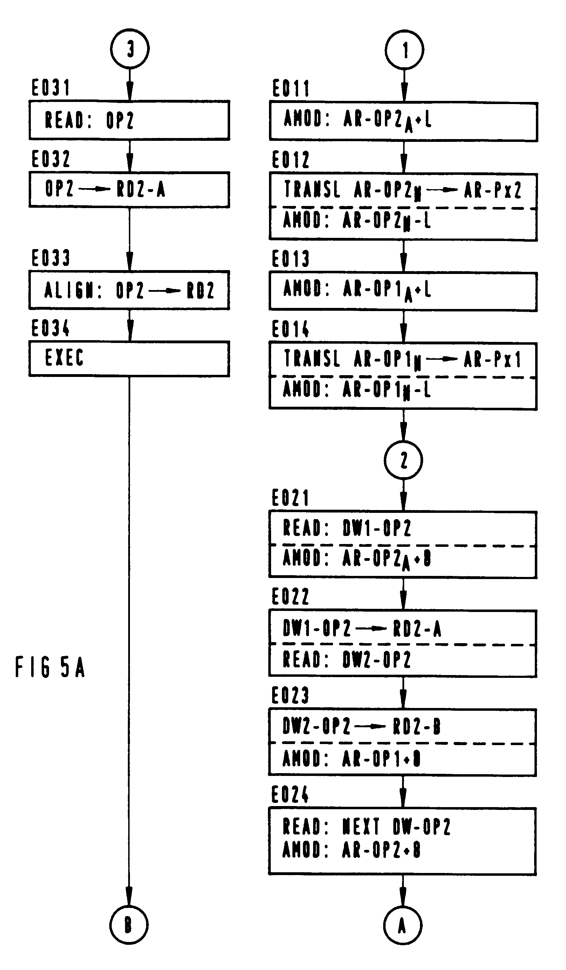

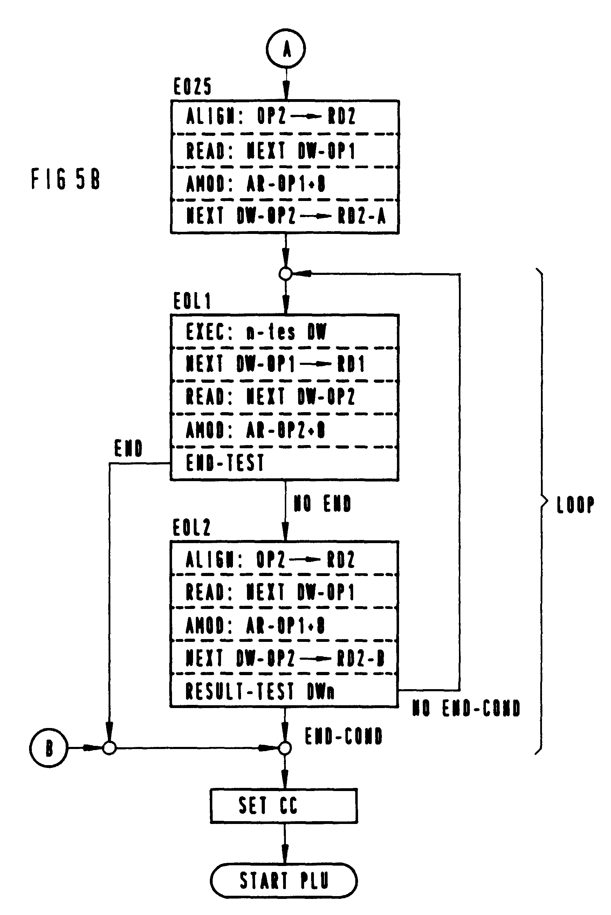

Die sich aus diesen Randbedingungen ergebende Arbeitsweise der Mikroprogrammsteuerung µ-ST des Befehlsausführungsprozessors EXU sei nun anhand der Ablaufdiagramme von Figur 4, 5A und 5B näher erläutert, wobei jeder Kasten mit den darin angegebenen Steuerungsfunktionen einer Elementaroperation oder kurz einem Zyklus EO entspricht.

Figur 4 bezieht sich auf die Übergabe eines Befehls vom Befehlsaufbereitungsprozessor PLU an den Befehlsausführungsprozessor EXU. Der Befehlsaufbereitungsprozessor PLU benötigt dazu zwei Zyklen. Im ersten Zyklus PLU-EOn-1 wird mit TRANSL die virtuelle Adresse VAD-OP1 für den ersten Operanden übersetzt, und es werden die Befehlsparameter PAR an den Befehlsausführungsprozessor EXU übergeben. Im nachfolgenden Zyklus PLU-EOn wird mit READ schließlich die übersetzte absolute Adresse AAD für die Speicheransteuerung auf den Adreßbus AD-BUS geschaltet und davon die absolute Seitenadresse APAG ins zuständige Register AR-Px1 übernommen. Außerdem wird die virtuelle Adresse VAD-OP2 des zweiten Operanden für die Übernahme ins Register AR-OP2 bereitgestellt und mit START FA die Bereitstellung der Anfangsadresse für das anhand des mitgeteilten Operationscodes OPCODE von der Mikroprogrammsteuerung µ-ST des Befehlsausführungsprozessors EXU einzuleitende Mikroprogramm µ-PROG veranlaßt.

Mit dem nachfolgenden Zyklus EXU-EO1 beginnt dann die Abarbeitung des aufgerufenen Mikroprogramms µ-PROG zur Befehlsverarbeitung durch den Befehlsausführungsprozessor EXU, indem mit TRANSL die übernommene virtuelle Adresse VAD-OP2 übersetzt und ins zuständige Register AR-Px2 übernommen wird. Außerdem wird das inzwischen gelesene erste Doppelwort DW1 des ersten Operanden OP1 ins Register RD1 und die virtuelle Adresse VAD-OP1 ins Register AR-OP1 übernommen. Im darauffolgenden Zyklus EXU-EO2 wird schließlich mit BRANCH INDIR. anhand der vorliegenden Befehlsparameter PAR geprüft, wie das eingeleitete Mikroprogramm µ-PROG fortzusetzen ist. Dabei sind im vorliegenden Falle drei Verzweigungsmöglichkeiten vorgesehen:
1. Bei PCAR12=1 ist die Übersetzung für eine Folgeseite erforderlich.
2. Bei NREAD ist PCAR12=0 und nur ein Nachlesen des zweiten Doppelwortes DW2 vom zweiten Operanden OP2 vor der Verarbeitung des ersten Teiloperanden erforderlich.
3. Bei OP-COMPL kann die Verarbeitung ohne weitere Übersetzung oder Nachlesen nach Vorliegen des ersten Doppelwortes DW1 vom zweiten Operanden OP2 durchgeführt werden.

Wird keiner dieser Mikroprogrammzweige aufgerufen, liegt ein Fehler vor, was mit ERR-STOP zum Maschinenstopp und zur Überleitung in eine Fehlerbehandlungsroutine führt.

Figur 5A und 5B geben den weiteren Steuerungsverlauf für die einzelnen Mikroprogrammzweige wieder, wobei die jeweils erste Ziffer hinter der Zyklusbezeichnung EO den jeweiligen Mikroprogrammzweig und die zweite Ziffer die laufende Nummer im Zweig kennzeichnet.

Im Falle einer weiteren Seitenübersetzung wird im Zyklus EO11 mit AMOD zunächst das Operandenende für den zweiten Operanden OP2 durch das Addier-Subtrahierwerk ADD ermittelt und die neue Adresse ans Register AR-OP2 übergeben. Im nächsten Zyklus EO12 wird, falls bei der Adreßrechnung ein Übertrag PCAR aufgetreten ist, die neue virtuelle Adresse VAD-OP2 aus dem Register AR-OP2 übersetzt und die absolute Seitenadresse APAG der Folgeseite im zuständigen zweiten Register AR-Px2 zwischengespeichert. Außerdem wird mit AMOD die vorherige Adreßrechnung wieder rückgängig gemacht. Wird kein Übertrag PCAR vom Addier/Subtrahierwerk ADD angezeigt, unterbleibt dagegen die Adreßübersetzung.

In den nächsten beiden Zyklen EO13 und EO14 wiederholt sich derselbe Ablauf für den ersten Operanden OP1. Sind also Adreßübersetzungen erforderlich, so werden diese als erstes durchgeführt und die Ergebnisse zwischengespeichert.

Der nachfolgende Steuerungsablauf ist derselbe, als wenn ein Nachlesen ohne vorherige Seitenübersetzung gegeben ist. Als erstes wird im Zyklus EO21 mit READ das erste Doppelwort DW1 vom zweiten Operanden OP2 mit der übersetzten Adresse gelesen und die virtuelle Adresse VAD-OP2 mit AMOD um die Länge eines Doppelwortes DW entsprechend acht Bytes fortgeschrieben.

Im nächsten Zyklus EO22 wird das gelesene erste Doppelwort DW1 vom zweiten Operanden OP2 ins Register RD2-A übernommen und das zweite Doppelwort DW2 des zweiten Operanden OP2 mit der im vorhergehenden Zyklus EO21 ermittelten Adresse nachgelesen, das dann im nachfolgenden Zyklus EO23 ins Register RD2-B übernommen wird, wobei parallel dazu mit AMOD die Adresse für den ersten Operanden OP1 im Register AR-OP1 fortgeschrieben wird.

Die beiden nachfolgenden Zyklen dienen in erster Linie dem Vorauslesen der nächsten Doppelwörter NEXT DW beider Operanden mit READ, und zwar im Zyklus EO24 für den zweiten Operanden OP2 und im Zyklus EO25 für den ersten Operanden OP1, wobei jeweils parallel die Adresse mit AMOD fortgeschrieben wird. Außerdem wird im Zyklus EO25 der in den Registern RD2-A und RD2-B bereitstehende Operandenteil des zweiten Operanden OP2 mit ALIGN ausgerichtet und im Register RD2 für die Verarbeitung bereitgestellt, so daß das im Zyklus EO24 vorausgelesene nächste Doppelwort NEXT DW des zweiten Operanden OP2 ins Register RD2-A übernommen werden kann.

Nach dieser Vorbereitung kann in eine aus lediglich zwei Zyklen EOL1 und EOL2 bestehende Schleifensteuerung LOOP übergeleitet werden. Diese beiden Zyklen haben einerseits die gleiche Funktion wie die vorausgehenden Zyklen EO24 und EO25. Zusätzlich wird im ersten Zyklus EOL1 - beginnend mit dem ersten Doppelwort DW1 des ersten Operanden OP1 - die eigentliche Befehlsausführung mit EXEC durchgeführt und das im Zyklus E25 vorausgelesene nächste Doppelwort des ersten Operanden OP1 ins Register RD1 übernommen. Außerdem wird mit END-TEST jeweils geprüft, ob der auszuführende Befehl damit vollständig ausgeführt ist. Ist dies der Fall, erfolgt mit END ein Aussprung aus der Schleife, so daß im letzten Zyklus des Mikroprogramms mit SET CC die zugehörige Anzeige gesetzt und dem Befehlsaufbereitungsprozessor PLU das Ende der Befehlsausführung mitgeteilt wird. Im anderen Falle wird mit NO END auf den zweiten Zyklus EOL2 übergeleitet. Neben den Funktionen des Zyklus EO25 wird in diesem Zyklus bei Verknüpfungsbefehlen mit ergebnisabhängiger Abbruchbedingung zusätzlich geprüft, ob beim im vorhergehenden Zyklus EOL1 jeweils gewonnenen Verknüpfungsergebnis RES entsprechend END-COND die Abbruchbedingung erfüllt war oder entsprechend NO END-COND nicht. Im letzteren Falle wird die Schleifensteuerung fortgesetzt, während sie im anderen Falle abgebrochen und mit SET CC wiederum die Anzeige gesetzt wird.

Mit diesen beiden Schleifenzyklen nach der Anlaufphase erfolgt bei längeren Operanden einerseits ein abwechselndes Vorauslesen der jeweils nächsten Doppelwörter NEXT DW zunächst vom zweiten Operanden OP2 und dann vom ersten Operanden OP1 sowie ein abwechselndes Verarbeiten mit EXEC und ein Ausrichten des vorausgelesenen Doppelwortes DW vom Operanden OP2 mit ALIGN, ohne daß jedesmal eine Adreßübersetzung für das Operandenvorauslesen erforderlich ist und ohne daß jedesmal geprüft werden muß, ob die Seitengrenze erreicht und überschritten wird und daher in eine andere Mikrobefehlsfolge zu verzweigen ist, um ein unzulässiges Vorauslesen zu verhindern. Es kann vielmehr ein einfacher Vorauslesemechanismus unabhängig vom Überschreiten einer Seitengrenze beibehalten werden, weil bei einer ungültigen Seitenadresse APAD in den Registem AR-Pxy der Zugriff zum Speicher in einfacher Weise unterbunden werden kann, indem der Speicherzugriffsbefehl abhängig vom zugehörigen Gültigkeitsbit V in einen NOOP-Befehl abgewandelt wird.

Ist dagegen der dritte Mikroprogrammzweig anzusteuern, demzufolge die Operanden ohne Seitenüberschreitung und ohne Nachlesen mit einem Speicherzugriff jeweils vollständig gelesen werden können, dann wird mit dem Zyklus EO31 der zweite Operand OP2 gelesen, mit Zyklus EO32 ins Register RD2-A übernommen sowie im nachfolgenden Zyklus EO33 ausgerichtet, so daß im Zyklus EO34 bereits mit EXEC die Ausführung erfolgen und im nachfolgenden Zyklus die Anzeige gesetzt werden kann.

Den vorausgehend erläuterten Steuerungsablauf könnte man an einigen Stellen auch ohne weiteres abändern. So könnte man beispielsweise in den Fällen, bei denen eine weitere Seitenübersetzung nur für einen der Operanden erforderlich ist, bei entsprechender Differenzierung der Anzeige PCAR12 zwei Elementaroperationen EO einsparen. Auch könnte man bei längeren Operanden unterscheiden, ob für die Verarbeitung des ersten Teiloperanden ein Nachlesen für den zweiten Operanden notwendig ist, so daß die Zyklen EO22 und EO23 zu einem Zyklus zusammengefaßt werden könnten. Das würde aber entweder die Folgeadreßrechnung der Mikroprogrammsteuerung µ-ST mit zusätzlichen Test belasten, um in die entsprechenden Verzweigungen im Mikroprogrammlauf überleiten zu können. Oder aber es müßten von vornherein entsprechend den möglichen verschiedenen Ablauffolgen entsprechende Mikroprogrammzweige vorgesehen werden, was gegenüber den beschriebenen drei Zweigen den Aufwand für das Mikroprogramm erhöht, weil dann gleichartige Mikrobefehle in verschiedenen Programmzweigen vorzusehen sind.

## Patentansprüche

1. Verfahren zur Beschleunigung der Ausführung von feldverarbeitenden Befehlen, z.B. Speicher-Speicher Befehlen, in nach dem Fließbandprinzip arbeitenden Datenverarbeitungsanlagen mit einem Befehlsaufbereitungsprozessor (PLU) für Befehlslesen, Adreßrechnung und Operandenbereitstellung und mit einem Befehlsausführungsprozessor (EXU) für die eigentliche Befehlsausführung in Verbindung mit einem in Seiten gleicher Größe unterteilten Speichersystem (MM-SYST) mit einem Doppelwortraster für das Lesen und Schreiben unabhängig vom Beginn eines Operanden innerhalb eines Doppelwortes, wobei im Rahmen der Befehlsaufbereitung anhand der Längenangaben für die Operanden jeweils überprüft wird, ob im Rahmen der Operandenbereitstellung eine Seitenüberschreitung notwendig wird, und das jeweilige Ergebnis (PCAR...) dem Befehlsausführungsprozessor (EXU) bei der Übergabe des aufbereiteten Befehls mitgeteilt wird, so daß dieser bei einer signalisierten Seitenüberschreitung (PCAR...) vor der eigentlichen Befehlsausführung eine Adreßumsetzung für gegebenenfalls benötigte Folgeseiten vornehmen und nicht vorhandene Folgeseiten nachladen kann,
**dadurch gekennzeichnet**,
- daß die für die Bereitstellung der Operanden von den virtuellen Seitenadressen (VPAD) abgeleiteten absoluten Seitenadressen (APAD) in einem ersten Register (AR-Px1, AR-Px2) gespeichert und für gültig erklärt werden,
- daß im Falle von angezeigten Seitenüberschreitungen auch die virtuellen Adressen (VPAD) für die jeweils benötigten Folgeseiten übersetzt und die entsprechenden absoluten Seitenadressen (APAD) in weiteren Registern (AR-PE1 oder AR-PO1 bzw. AR-PE2 oder AR-PO2) gespeichert und für gültig erklärt werden,
- daß bei jeder nachfolgend im Rahmen der Befehlsausführung einzuleitenden Bereitstellung eines neuen Teiloperanden die zuständige und für gültig erklärte gespeicherte absolute Seitenadresse (APAD) unmittelbar mit der Byteadresse (VAD20-31) der fortgeschriebenen virtuellen Speicheradresse (VAD...) für die Bildung der benötigten absoluten Adresse (AAD) verwendet und mit dieser auf das Speichersystem (MM-SYST) zugegriffen wird, während bei einer ungültigen absoluten Seitenadresse (APAD) der Speicherzugriff unterbunden wird.

2. Verfahren nach Anspruch 1,
**dadurch gekennzeichnet**,
- daß das für die Adresse nicht maßgebliche höchstwertige Adressenbit (VADO) einer virtuellen Adresse (VAD) als Gültigkeitsbit (V) für das Gültigerklären der jeweils übersetzten und in den Registern (AR-Px1, AR-Px2) zwischengespeicherten absoluten Seitenadresse (APAD) mit den Adressenbits (AAD1-19) verwendet wird.

3. Verfahren nach Anspruch 2,
**dadurch gekennzeichnet**,
- daß die Gültigkeitsbits (V) in den Registern (AR-Px1, AR-Px2) jeweils vor dem Start des Befehlsausführungsprozessors (EXU) für die Ausführung eines vom Befehlsaufbereitungsprozessor (PLU) bereitgestellten Befehls auf logisch "1" gesetzt um den jeweiligen Registerinhalt für ungültig zu erklären und bei jeder Übernahme einer gültigen absoluten Seitenadresse (APAD) in eines der Register (AR-Pxy) registerbezogen wieder zurückgesetzt werden.

4. Verfahren nach Anspruch 2 oder 3,
**dadurch gekennzeichnet**,
- daß bei jedem Speicherzugriff das zusammen mit der absoluten Seitenadresse(APAD) als Adressenbit (AADO) weitergeleitete Gültigkeitsbit (V) den jeweiligen Zugriffsbefehl in einen NOOP-Befehl abwandelt, wenn es auf logisch "1" gesetzt ist.

5. Verfahren nach einem der Ansprüche 1 bis 4,
**dadurch gekennzeichnet**,
- daß nach einer Anlaufphase für die Befehlsausführung durch den Befehlsausführungsprozessor (EXU) mit Vorauslesen des für die Ausführung des (n=2)-ten Teiloperanden benötigten Doppelwortes (NEXT DW-OP2) vom zweiten Operanden im vorletzten Maschinenzyklus und mit Vorauslesen des (n=2)-ten Doppelwortes (NEXT DW-OP1) vom ersten Operanden bei gleichzeitiger Ausrichtung des bereits bereitgestellten ersten Teiloperanden vom zweiten Operanden sowie anschließender Übernahme des zuvor vorausgelesenen Doppelwortes des zweiten Operanden ins Bereitstellungsregister (RD2...) im letzten Maschinenzyklus der Anlaufphase in eine aus zwei Maschinenzyklen bestehende Schleifensteuerung (LOOP) übergeleitet wird, und
- daß im ersten Maschinenzyklus (EOL1) der Schleifensteuerung beginnend mit dem (n=1)- ten Teiloperanden jeweils die Befehlsausführung für die bereitgestellten und ausgerichteten Teiloperanden erfolgt, das vorausgelesene nächste Doppelwort vom ersten Operanden ins Bereitstellungsregister (RD1) übernommen und bereits das nächste Doppelwort vom zweiten Operanden vorausgelesen wird, während im nachfolgenden zweiten Maschinenzyklus (EOL2) jeweils der zwei Maschinenzyklen vorher in den Bereitstellungsregistern (RD2-A oder RD2-B) bereitstehende nächste Teiloperand des zweiten Operanden ausgerichtet, das nächste Doppelwort (NEXT DW-OP1) vom ersten Operanden vorausgelesen, sowie das im ersten Maschinenzyklus vorausgelesene Doppelwort vom zweiten Operanden ins Bereitstellungsregister übernommen wird.

6. Verfahren nach Anspruch 5,
**dadurch gekennzeichnet**,
- daß im jeweils ersten Maschinenzyklus (EOL1) der Schleifensteuerung (LOOP) zusätzlich überwacht wird, ob das Ende der zu verarbeitenden Operanden erreicht ist,
- daß im jeweils zweiten Maschinenzyklus (EOL2) bei der Ausführung von Verknüpfungsbefehlen mit ergebnisabhängiger Weiterverarbeitung überwacht wird, ob die Abbruchbedingung bei dem im Maschinenzyklus vorher gewonnenen Verknüpfungsergebnis gegeben ist, und
- daß nach Abarbeitung der Operanden oder bei Vorliegen der Abbruchbedingung die zugehörige Anzeige (CC) gesetzt und damit die Befehlsausführung beendet wird.

7. Verfahren nach Anspruch 5 oder 6,
**dadurch gekennzeichnet**,
- daß die Anlaufphase für die Befehlsausführung mit einer aus drei Maschinenzyklen bestehenden Startphase beginnt,
- wobei im 1. Zyklus die aus Operationscode (OP), Operandenlänge (L) und weiteren Parametern (z.B. PCAR...) bestehenden Befehlsparameter (PAR) vom Befehlsaufbereitungsprozessor (PLU) an den Befehlsausführungsprozessor (EXU) übergeben werden,
- wobei im 2. Zyklus die Startadresse für das die Befehlsausführung steuernde Mikroprogramm bereitgestellt, und vom Befehlsausführungsprozessor (EXU) die auf dem Speicheradreßbus (AD-BUS) anliegende absolute Seitenadresse (APAD) zum Lesen des ersten Doppelwortes des ersten Operanden sowie die vom Befehlsaufbereitungsprozessor (PLU) gelieferte virtuelle Adresse (VAD-OP2) für den zweiten Operanden übernommen wird, und
- wobei im dritten Maschinenzyklus das ausgewählte Mikroprogramm zur Befehlsausführung gestartet und die virtuelle Adresse (VAD-OP1) für den ersten Operanden vom Befehlsaufbereitungsprozessor übernommen wird.

8. Verfahren nach Anspruch 7,
**dadurch gekennzeichnet**,
- daß im weiteren Verlauf der Anlaufphase zunächst die virtuelle Adresse (VAD-OP2) für den 2. Operanden übersetzt und daß anschließend abhängig von den jeweiligen Parametern (PCAR12=1, OPCOMPL, NREADOP2) der jeweils entsprechende µ-Programmzweig aufgerufen wird.

9. Verfahren nach Anspruch 8,
**dadurch gekennzeichnet**,
- daß bei einer angezeigten Seitenüberschreitung (PCAR12=1) für die davon betroffenen Operanden zunächst das jeweilige Operandenende berechnet und die zugehörige virtuelle Adresse übersetzt wird, bevor das 1. Doppelwort für den 2. Operanden und bei Überschreiten der Doppelwort-Grenze für den benötigten 1. Teiloperanden des 2. Operanden ein weiteres Doppelwort nachgelesen wird.

10. Schaltungsanordnung zur Beschleunigung der Ausführung von feldverarbeitenden Befehlen, z.B. Speicher-Speicher Befehlen, in nach dem Fließbandprinzip arbeitenden Datenverarbeitungsanlagen mit einem Befehlsaufbereitungsprozessor (PLU) für Befehlslesen, Adreßrechnung und Operandenbereitstellung und mit einem Befehlsausführungsprozessor (EXU) für die eigentliche Befehlsausführung in Verbindung mit einem in Seiten gleicher Größe unterteilten Speichersystem (MM-SYST) mit einem Doppelwortraster für das Lesen und Schreiben unabhängig vom Beginn eines Operanden innerhalb eines Doppelwortes, wobei im Rahmen der Befehlsaufbereitung anhand der Längenangaben für die Operanden jeweils überprüft wird, ob im Rahmen der Operandenbereitstellung eine Seitenüberschreitung notwendig wird, und das jeweilige Ergebnis (PCAR...) dem Befehlsausführungsprozessor (EXU) bei der Übergabe des aufbereiteten Befehls mitgeteilt wird, so daß dieser bei einer signalisierten Seitenüberschreitung (PCAR...) vor der eigentlichen Befehlsausführung eine Adreßumsetzung für gegebenenfalls benötigte Folgeseiten vornehmen und nicht vorhandene Folgeseiten nachladen kann,
**dadurch gekennzeichnet**,
- daß die Adreßübersetzungseinheit (DAT) des Befehlsausführungsprozessors (EXU) neben den beiden Adressenregistern (AR-OP1, AR-OP2) für die Übernahme der virtuellen Operandenadressen (VA-OP1, VA-OP2) vom Aufbereitungsprozessor (PLU) und einem Addier-/Subtrahierwerk (ADD) für die Berechnung der jeweiligen Operandenenden und zum Fortschreiben der virtuellen Adresse in den Adressenregistern in Doppelwortschritten entsprechend der voranschreitenden Befehlsausführung für jeden Operanden wenigstens zwei Register (AR-PE1, AR-PO1 bzw. AR-PE2, AR-PO2) für die Zwischenspeicherung der für die Befehlsausführung benötigten absoluten Seitenadressen (APAD) und Einrichtungen zur Steuerung der Gültigkeitsanzeige (V) für die einzelnen absoluten Seitenadressen in den Registern aufweist, und
- daß mit den Ausgängen der Register (AR-PE..., AR-PO...) für die absolute Seitenadresse (APAD) Auswahlschalter (MUX4 bis MUX6) gekoppelt sind, die abhängig vom niederwertigsten Adressenbit (VAD19) der virtuellen Seitenadresse (VPAD) und vom Operandenauswahlsignal (OP-AW2) der Mikroprogrammsteuerung (µ-ST) des Befehlsausführungsprozessors (EXU) einstellbar sind und die die jeweils benötigte absolute Seiten; adresse (APAD) für die direkte Ansteuerung des Speichersystems (MM-SYST) in Verbindung mit der jeweiligen Byteadresse (VAD20-31) aus dem zugehörigen Adressenregister (AR-OP1 bzw. AR-OP2) freigeben, und
- daß mit den Ausgängen für die Gültigkeitsanzeigen der Register (AR-PE..., AR-PO..) für die absolute Seitenadresse schaltvorrichtungen verbunden sind, um bei einer ungültigen absoluten Seitenadresse der Speicherzugriff zu unterbinden.

11. Schaltungsanordnung nach Anspruch 10,
dadurch gekennzeichnet,
daß als Gültigkeitsanzeige (V) für die einzelnen absoluten Seitenadressen (APAD) jeweils die dem höchstwertigen Adressenbit (VADO) der virtuellen adresse (VAD) vorgesehen ist und in die entsprechende Registerstufe in den einzelnen Registern (AR-Pxy) für die Zwischenspeicherung der absoluten Seitenadressen (APAD) geladen wird und
daß die jeweils als Gültigkeitsanzeige (V) dienenden Registerstufen beim Start des Befehlsausführungsprozessors (EXU) durch die Mikroprogrammsteuerung (µ-ST) unabhängig von der Übernahme einer gültigen absoluten Seitenadresse (APAD) mit einer logischen "0" als höchstwertiges Adressenbit (AADO) auf logisch "1" setzbar sind, um den jeweiligen Registerinhalt für ungültig zu erklären.

12. Schaltungsanordnung nach Anspruch 11,
dadurch gekennzeichnet,
daß die Schalteinrichtungen in solcher Weise vorgesehen sind, daß die bei einem auf logisch "1" gesetzten höchstwertigen Adressenbit (AADO) einer für den Speicherzugriff bereitzustellenden absoluten Seitenadresse (APAD) den jeweiligen Speicherbefehl (Lesen, Schreiben) in einen NOOP-Befehl abwandelt und dadurch den Speicherzugriff unterbinden.

13. Schaltungsanordnung nach einem der Ansprüche 10 bis 12,
dadurch gekennzeichnet,
daß den Registern (AR-Pxl) zur Zwischenspeicherung der absoluten Seitenadressen (APAD) für den ersten Operanden ein weiterer Auswahlschalter (MUX3) vorgeschaltet ist, der mit einem seiner zwei Eingänge an den Adreßbus (AD-BUS) für das Speichersystem (MM-SYST) und mit seinem anderen Eingang an den Ausgang des Adreßübersetzungsteiles (TRANS) der Adreßübersetzungseinheit (DAT) angeschlossen ist.

## Claims

1. Method for accelerating the execution of array-processing commands, e.g. memory-memory commands, in data processing systems that operate on the pipeline principle, having a command preparation processor (PLU) for reading commands, calculating addresses and providing operands, and having a command execution processor (EXU) for the actual execution of the command in conjunction with a memory system (MM-SYST) which is subdivided into pages of equal size and has a double-word spacing for reading and writing independently of the beginning of an operand within a double word, a check being made in each case, within the context of preparing a command using the length statements for the operands, as to whether it is necessary to go beyond a page in providing the operand, and the respective result (PCAR...) being communicated to the command execution processor (EXU) when the prepared command is transferred, so that, in the event of going beyond a page being signalled (PCAR...), the said command execution processor can perform an address conversion for any following pages that may be needed before actually executing the command and can subsequently load any following pages that are not present, characterized
- in that the absolute page addresses (APAD) that are derived from the virtual page addresses (VPAD) for the provision of the operands are stored in a first register (AR-Px1, AR-Px2) and declared as valid,
- in that, in the event of going beyond pages being indicated, the virtual addresses (VPAD) for the following pages needed in each case are also translated, and the corresponding absolute page addresses (APAD) are stored in further registers (AR-PE1 or AR-PO1, or AR-PE2 or AR-PO2) and declared as valid,
- in that, in the case of each subsequent provision of a new part operand that is to be introduced in the context of executing the command, the stored absolute page address (APAD) that is relevant and declared as valid is used directly, together with the byte address (VAD20-31) of the extrapolated virtual memory address (VAD...), for forming the necessary absolute address (AAD) and the latter is used to access the memory system (MM-SYST), whereas, in the case of an invalid absolute page address (APAD), the memory access is prevented.

2. Method according to Claim 1, characterized in that
- the most significant address bit (VADO) of a virtual address (VAD) which is not decisive for the address is used as a validity bit (V) for declaring the validity of the page address (APAD) that is respectively translated and temporarily stored in the registers (AR-Px1, AR-Px2) with the address bits (AAD1-19).

3. Method according to Claim 2, characterized in that
- the validity bits (V) in the registers (AR-Px1, AR-Px2) are in each case set to logic "1" before starting the command execution processor (EXU) for executing a command provided by the command preparation processor (PLU), in order to declare the respective register content as invalid, and are reset again, with reference to a register, at the time of each transfer of a valid absolute page address (APAD) into one of the registers (AR-Pxy).

4. Method according to Claim 2 or 3, characterized in that
- at the time of each memory access, the validity bit (V) that is forwarded together with the absolute page address (APAD) as an address bit (AADO) modifies the respective access command into a NOOP command if the said validity bit is set to logic "1".

5. Method according to one of Claims 1 to 4, characterized
- in that after each start-up phase for the execution of the command by the command execution processor (EXU), with reading in advance of the double word (NEXT DW-OP2) that is needed for the execution of the (n=2)th part operand from the second operand in the last-but-one machine cycle, and with reading in advance of the (n=2)th double word (NEXT DW-OP1) from the first operand, with simultaneous alignment of the first part operand already provided from the second operand and subsequent transfer of the double word previously read in advance from the second operand into the provision register (RD2...), in the last machine cycle of the start-up phase a transition is made into a loop control (LOOP) consisting of two machine cycles, and
- in that in the first machine cycle (EOL1) of the loop control, beginning with the (n=1) th part operand, in each case the execution of the command takes place for the part operands provided and aligned, the next double word read in advance is transferred from the first operand into the provision register (RDI) and the next double word is already read in advance from the second operand, while in the subsequent, second machine cycle (ELO2), in each case the next part operand, provided two machine cycles previously in the provision registers (RD2-A or RD2-B), of the second operand is aligned, the next double word (NEXT DW-OP1) is read in advance from the first operand, and the double word read in advance from the second operand in the first machine cycle is taken over into the provision register.

6. Method according to Claim 5, characterized
- in that in the first machine cycle (EOL1) in each case of the loop control (LOOP), monitoring is additionally carried out to see whether the end of the operand to be processed has been reached,
- in that, in the second machine cycle (EOL2) in each case, in the event of executing linking commands having result-dependent further processing, monitoring is carried out to see whether the abort condition is given in the linking result previously obtained in the machine cycle, and
- in that, following the processing of the operands or in the event of the abort condition being present, the associated indicator (CC) is set and the execution of the command is thus completed.

7. Method according to Claim 5 or 6, characterized in that
- the start-up phase for executing the command begins with a start phase consisting of three machine cycles,
- in the 1st cycle, the command parameters (PAR) consisting of operation code (OP), operand length (L) and further parameters (e.g. PCAR...), being transferred by the command preparation processor (PLU) to the command execution processor (EXU),
- in the 2nd cycle, the start address being provided for the microprogram that controls the execution of the command, and the absolute page address (APAD) for reading the first double word of the first operand, which address is present on the memory address bus (AD-BUS), and the virtual address (VAD-OP2) for the second operand, which address is supplied by the command preparation processor (PLU), being taken over by the command execution processor (EXU), and
- in the third machine cycle, the selected microprogram for executing the command being started and the virtual address (VAD-OP1) for the first operand being taken over by the command preparation processor.

8. Method according to Claim 7, characterized in that
- in the further course of the start-up phase, firstly the virtual address (VAD-OP2) for the 2nd operand is translated and then, depending on the respective parameters (PCAR 12=1, OPCOMPL, NREADOP2), the respectively corresponding µ-program branch is called.

9. Method according to Claim 8, characterized in that
- in the event of going beyond a page being indicated (PCAR 12=1), for the operands that are affected by this, firstly the respective operand end is calculated and the associated virtual address is translated, before the 1st double word for the 2nd operand is read, and, in the event of going beyond the double word boundary for the necessary 1st part operand of the 2nd operand, a further double word is read.

10. Circuit arrangement for accelerating the execution of array-processing commands, e.g. memory-memory commands, in data processing systems that operate on the pipeline principle, having a command preparation processor (PLU) for reading commands, calculating addresses and providing operands, and having a command execution processor (EXU) for the actual execution of the command in conjunction with a memory system (MM-SYST) which is subdivided into pages of equal size and has a double-word spacing for reading and writing independently of the beginning of an operand within a double word, a check being made in each case, within the context of preparing a command using the length statements for the operands, as to whether it is necessary to go beyond a page in providing the operand, and the respective result (PCAR. . .) being communicated to the command execution processor (EXU) when the prepared command is transferred, so that, in the event of going beyond a page being signalled (PCAR...), the said command execution processor can perform an address conversion for any following pages that may be needed before actually executing the command and can subsequently load any following pages that are not present, characterized
- in that in addition to the two address registers (AR-OP1, AR-OP2) for taking over the virtual operand addresses (VA-OP1, VA-OP2) from the preparation processor (PLU) and an adder/subtracter mechanism (ADD) for calculating the respective operand ends and for writing the virtual address in the address registers in double-word steps corresponding to the preceding execution of a command, the address translation unit (DAT) of the command execution processor (EXU) has, for each operand, at least two registers (AR-PE1, AR-PO1 or AR-PE2, AR-PO2) for the temporary storage of the absolute page addresses (APAD) necessary for executing the command, and devices for controlling the validity indicator (V) for the individual absolute page addresses in the registers, and
- in that coupled to the outputs of the registers (AR-PE..., AR-PO...) for the absolute page address (APAD) are selection switches (MUX4 to MUX6) which can be set as a function of the least significant address bit (VAD 19) of the virtual page address (VPAD) and of the operand select signal (OP-AW2) of the microprogram controller (µ-ST) of the command execution processor (EXU), and which enable the respectively necessary absolute page address (APAD) for the direct driving of the memory system (MM-SYST) in conjunction with the respective byte address (VAD20-31) from the associated address register (AR-OP1 or AR-OP2), and
- in that switching devices are connected to the outputs for the validity indicators of the registers (AR-PE..., AR-PO...) for the absolute page address, in order to prevent the memory access in the event of an invalid absolute page address.

11. Circuit arrangement according to Claim 10, characterized
in that in each case the most significant address bit (VADO) of the virtual address (VAD) is provided as the validity indicator (V) for the individual absolute page addresses (APAD) and is loaded into the appropriate register stage in the individual registers (AR-Pxy) for the temporary storage of the absolute page addresses (APAD) and
in that, when the command execution processor (EXU) is started by the microprogram controller (µ-ST), the register stages in each case serving as a validity indicator (V) can be set to logic "1", irrespective of taking over a valid absolute page address (APAD) with a logic "0" as the most significant address bit (AADO), in order to declare the respective register content as invalid.

12. Circuit arrangement according to Claim 11, characterized in that the circuit devices are provided in such a way that, in the event of a most significant address bit (AADO) of an absolute page address (APAD) that is to be provided for the memory access being set to logic "1", the said devices modify the respective memory command (read, write) into an NOOP command and hence prevent the memory access.

13. Circuit arrangement according to one of Claims 10 to 12, characterized in that a further select switch (MUX3) is connected upstream of the registers (AR-Px1) for the temporary storage of the absolute page addresses (APAD) for the first operand and is connected by one of its two inputs to the address bus (AD-BUS) for the memory system (MM-SYST) and by its other input to the output of the address translation part (TRANS) of the address translation unit (DAT).

## Revendications

1. Procédé pour accélérer l'exécution d'instructions de traitement de champ, par exemple d'instructions mémoire-mémoire, dans des installations de traitement de données travaillant suivant le principe de la chaîne, comportant un processeur (PLU) de préparation d'instructions pour la lecture d'instructions, le calcul d'adresses et la préparation d'opérandes et comportant un processeur (EXU) d'exécution d'instructions pour l'exécution proprement dite en liaison avec un système (MM-SYST) de mémorisation subdivisé en pages de même dimension, comportant une trame de double mot pour la lecture et l'écriture indépendamment du début d'un opérande à l'intérieur d'un double mot, avec vérification pendant la préparation des instructions, à l'aide des indications de longueur pour les opérandes, si un dépassement de pages est nécessaire dans le cadre de la préparation des opérandes, et le résultat (PCAR) associé étant communiqué au processeur (EXU) d'exécution d'instructions lors de la transmission de l'instruction préparée, si bien qu'il peut, en cas de dépassement de pages signalé, procéder, avant l'exécution d'instructions proprement dite, à une transformation d'adresse pour des pages suivantes éventuellement nécessaires et rechargées des pages suivantes qui ne sont pas présentes,
caractérisé en ce que
- on met en mémoire dans un premier registre (AR-Px1, AR-Px2) et on déclare valables les adresses (APAD) de page absolues déduites des adresses (VPAD) de page virtuelles pour la préparation des opérandes,
- en ce que, dans le cas où des dépassements de page sont indiqués, on traduit aussi les adresses (VPAD) virtuelles pour les pages suivantes nécessaires et on met en mémoire dans des registres supplémentaires (AR-PE1 ou AR-PO1 ou AR-PE2 ou AR-PO2) et on déclare valables les adresses (APAD) de page absolues correspondantes,
- en ce que, à chaque préparation d'un nouvel opérande partiel à introduire par la suite dans le cadre de l'exécution d'instructions, on utilise pour former l'adresse (AAD) absolue nécessaire l'adresse (APAD) de page absolue mémorisée déclarée valable directement avec l'adresse (VAD20-31) d'octets de l'adresse (VAD...) de mémoire virtuelle mise à jour et on a accès par elle au système (MM-SYST) de mémorisation, tandis que, en cas d'adresse (APAD) de page absolue non valable, l'accès à la mémoire est supprimé.

2. Procédé suivant la revendication 1,
caractérisé en ce que
- l'on utilise le bit (VADO) d'adresses de plus grand poids, qui n'est pas déterminant, d'une adresse (VAD) virtuelle comme bit (V) de validité pour déclarer valable l'adresse (APAD) de page absolue traduite et mise en mémoire intermédiaire dans les registres (AR-Px1, AR-Px2) et comportant les bits (AAD1-19) d'adresses.

3. Procédé suivant la revendication 2,
caractérisé en ce que
- pour exécuter une instruction préparée par le processeur (PLU) de préparation d'instructions, on met les bits (V) de validité présents dans les registres (AR-Px1, AR-Px2) sur un "1" logique avant le démarrage du processeur (EXU) d'exécution d'instructions, afin de déclarer non-valable le contenu de registre associé et, à chaque prise en charge d'une adresse de page absolue valable dans l'un des registres (AR-Pxy), on les remet à nouveau à l'état initial en fonction du registre.

4. Procédé suivant la revendication 2 ou 3,
caractérisé en ce que
- à chaque accès à la mémoire, le bit (V) de validité transmis comme bit (AADO) d'adresse conjointement avec l'adresse (APAD) de page absolue modifie l'instruction d'accès associée en une instruction NOOP s'il est mis sur un "1" logique.

5. Procédé suivant l'une des revendication 1 à 4,
caractérisé en ce que
- après une phase de lancement pour l'exécution de l'instruction par le processeur (EXU) d'exécution d'instructions comportant la lecture anticipée du double mot (NEXT DW-OP2) nécessaire pour l'exécution du n-ième (n=2) double mot (NEXT DW-OP2) nécessaire à des opérandes partiels par le deuxième opérande à l'avant dernier cycle de traitement et comportant la lecture anticipée du n-ième (n=2) double mot (NEXT DW-OP1) par le premier opérande, en ayant en même temps l'alignement du premier opérande partiel déjà préparé par le deuxième opérande, ainsi que la prise en charge qui suit du double mot précédemment lu de manière anticipée du deuxième opérande dans le registre (RD2...) de préparation au dernier cycle de traitement de la phase de démarrage, on passe à une commande (LOOP) en boucle constituée de deux cycles de traitement, et
- pendant le premier cycle (EOL1) de traitement de la commande en boucle commençant par le n-ième (n=1) opérande partiel, l'exécution de l'instruction est effectuée pour les opérandes partiels préparés et alignés, le double mot suivant lu de manière anticipée est pris en charge par le premier opérande dans le registre (RD1) de préparation et le double mot suivant est déjà lu de manière anticipée par le deuxième opérande, tandis que l'opérande partiel suivant du deuxième opérande, mis à disposition des deux cycles de traitement auparavant dans les registres (RD2-A ou RD2-B) de mise à disposition, est réglé, le double mot (NEXT DW-OP1) suivant est lu de manière anticipée par le premier opérande et le double mot lu de manière anticipée au premier cycle de traitement est pris en charge par le deuxième opérande dans le registre de mise à disposition.

6. Procédé suivant la revendication 5,
caractérisé en ce que
- on surveille en plus au premier cycle (EOL1) de traitement de la commande (LOOP) en boucle si l'on a atteint la fin de l'opérande à traiter,
- on surveille au deuxième cycle (EOL2) de traitement, pour l'exécution d'instructions de combinaison avec traitement ultérieur en fonction du résultat, si la condition de fin anormale est donnée pour le résultat de combinaison obtenu auparavant pendant le cycle de traitement, et
- après traitement des opérandes ou en cas de présence de la condition de fin anormale, on met l'affichage (CC) associé et on met donc fin à l'exécution d'instructions.

7. Procédé suivant la revendication 5 ou 6,
caractérisé en ce que
- la phase de lancement de l'exécution d'instructions commence par une phase de démarrage constituée de trois cycles de traitement,
- les paramètres (PAR) d'instructions consistant en le code (OP) d'opération, la longueur (L) d'opérande et des paramètres (par exemple PCAR...) supplémentaires étant transmis du premier cycle du processeur (PLU) de préparation d'instructions au processeur (EXU) d'exécution d'instructions,
- l'adresse de démarrage pour le microprogramme commandant l'exécution d'instructions étant mise à disposition au deuxième cycle, et, le processeur (EXU) d'exécution d'instructions prend en charge l'adresse (APAD) de page absolue présente sur le bus (AD-BUS) d'adresse de mémoire pour lire le premier double mot du premier opérande ainsi que l'adresse (VAD-OP2) virtuelle fournie par le processeur (PLU) de mise à disposition d'instructions pour le deuxième opérande, et
- le microprogramme sélectionné pour l'exécution d'instructions étant démarré au troisième cycle de traitement et l'adresse (VAD-OP1) virtuelle pour le premier opérande étant prise en charge par le processeur de mise à disposition d'instructions.

8. Procédé suivant la revendication 7,
caractérisé en ce que
- dans le cours ultérieur de la phase de lancement, l'adresse (VAD-OP2) virtuelle pour le deuxième opérande est d'abord traduite et, ensuite, en fonction des paramètres (PCAR12=1, OPCOMPL, NREADOP2) associés, la branche de programmes µ correspondante est appelée.

9. Procédé suivant la revendication 8,
caractérisé en ce que
- en cas de dépassement (PCAR12=1) de pages affiché, on calcule d'abord pour l'opérande concerné la fin d'opérande associée et l'on transmet l'adresse virtuelle associée avant de relire le premier double mot pour le deuxième opérande et, en cas de dépassement de la limite du double mot pour le premier opérande partiel nécessaire du deuxième opérande, un double mot supplémentaire.

10. Montage pour accélérer l'exécution d'instructions de traitement de champ, par exemple d'instructions mémoire-mémoire, dans des installations de traitement de données travaillant suivant le principe de la chaîne, comportant un processeur (PLU) de mise à disposition d'instructions pour la lecture d'instructions, le calcul d'adresses et la mise à disposition d'opérandes et comportant un processeur (EXU) d'exécution d'instructions pour l'exécution d'instructions proprement dite en relation avec un système (MM-SYST) de mémorisation subdivisé en pages de même dimension et comportant une trame de double mot pour la lecture ou l'écriture indépendamment du début d'un opérande à l'intérieur d'un double mot, avec vérification dans le cadre de la mise à disposition d'instructions, à l'aide des indications de longueur pour les opérandes, si un dépassement de pages est nécessaire dans le cadre de la mise à disposition d'opérandes, et le résultat (PCAR...) associé étant communiqué au processeur (EXU) d'exécution d'instruction lors de la transmission de l'instruction mise à disposition, si bien que ce processeur peut, en cas de dépassement (PCAR...) de page signalé, procéder, avant l'exécution d'instructions proprement dite, à une transformation d'adresses pour des pages suivantes éventuellement nécessaires et recharger des pages suivantes qui ne sont pas présentes,
caractérisé en ce que
- l'unité (DAT) de traduction d'adresse du processeur (EXU) d'exécution d'instructions comporte, outre les deux registres (AR-OP1, AR-OP2) d'adresse pour la prise en charge des adresses (VA-OP1, VA-OP2) virtuelles d'opérande par le processeur (PLU) de mise à disposition et un mécanisme (ADD) d'addition/soustraction pour le calcul des fins d'opérandes associées et, pour la mise à jour de l'adresse virtuelle dans les registres d'adresses par pas de double mot de manière correspondante à l'exécution d'instructions précédente, pour chaque opérande, au moins deux registres (AR-PE1, AR-PO1 et AR-PE2, AR-PO2) pour la mise en mémoire intermédiaire des adresses (APAD) de page absolues nécessaires à l'exécution d'instructions et des dispositifs pour commander l'indication (V) de validité pour les adresses de page absolues individuelles dans les registres et
- des interrupteurs (MUX4 à MUX6) de sélection qui peuvent être réglés indépendamment du bit (VAD19) d'adresses de plus petit poids de l'adresse (VPAD) de page virtuelle et du signal (OP-AW2) de sélection d'opérande de la commande (µ-ST) de microprogrammes du processeur (EXU) d'exécution d'instructions et qui libère du registre (AR-OP1, AR-OP2) d'adresse associée l'adresse (APAD) de page absolue nécessaire pour la commande directe du système (MM-SYST) de mémorisation en liaison avec l'adresse (VAD20-31) d'octets associée, sont couplés aux sorties des registres (AR-PE..., AR-PO...) pour l'adresse (APAD) de page absolue et
- des dispositifs de connexion sont reliés aux sorties pour les indications de validité des registres (AR-PE..., AR-PO...) pour l'adresse de page absolue, afin de supprimer l'accès à la mémoire si l'adresse de page absolue est valable.

11. Montage suivant la revendication 10,
caractérisé en ce que
- le bit (VADO) d'adresse de plus grand poids de l'adresse (VAD) virtuelle est prévu comme indication (V) de validité pour les adresses (APAD) de page absolues individuelles et est chargé dans l'étage de registre correspondant, dans les registres (AR-Pxy) individuels pour la mise en mémoire intermédiaire des adresses (APAD) de page absolue et
- les étages de registre servant d'indication (V) de validité peuvent, lors du démarrage du processeur (EXU) d'exécution d'instructions, être mis par la commande (µ-ST) de microprogrammes sur un "1" logique indépendamment de la prise en charge d'une adresse (APAD) de page absolue valable comportant un "0" logique comme bit (AADO) d'adresse de plus grand poids, afin de déclarer non valable le contenu de registres associé.

12. Montage suivant la revendication 11,
caractérisé en ce que les dispositifs de connexion sont prévus de telle manière que, pour un bit (AADO) d'adresse de plus grand poids, mis sur un "1" logique, d'une adresse (APAD) de page absolue à mettre à disposition pour l'accès à la mémoire, il transforme l'instruction de mémorisation associée (lecture, écriture) en une instruction NOOP et supprime ainsi l'accès à la mémoire.

13. Montage suivant l'une des revendications 10 à 12,
caractérisé en ce qu'il est monté en amont des registres (AR-Px1) servant à la mise en mémoire intermédiaire des adresses (APAD) de page absolues pour le premier opérande un commutateur (MUX3) de sélection supplémentaire qui est raccordé au bus (AD-BUS) d'adresse prévu pour le système (MM-SYST) de mémorisation par l'une de ses deux entrées et à la sortie de la partie (TRANS) de transmission d'adresses de l'unité (DAT) de transmission d'adresses par son autre entrée.
